# EUROPEAN PATENT APPLICATION

(11) **EP 4 488 940 A1**
(43) Date of publication of application: **08.01.2025**
(21) Application number: 23183178.5
(22) Date of filing: 04.07.2023
(51) Int. Cl.: G06T 7/521, G06T 1/00

(54) **METHOD FOR 3D RECONSTRUCTION**

(71) Applicant: VoxelSensors SRL, 1000 Brussels (BE)
(72) Inventor: Pataridis, Konstantinos, Oxford (GB); Rogge, Ségolène, Waterloo (BE)

(57) **Abstract**

The present invention relates to a method for 3D reconstruction of a scene (2). The method comprises the step of providing a first camera (3) having a known position and orientation. The method further comprises the step of determining a first set of projection lines corresponding to pixels (11) of said first camera (3), said projection lines being defined by the position and orientation of said camera (3) and the corresponding pixel (11). The method further comprises the step of projecting a light beam (13) on the scene (2) by means of a light source (12), thereby defining a dot (1) on said scene (2). The method further comprises the step of determining the pixel corresponding to an image of the dot (1) on said first camera (3), thereby defining a corresponding first projection line (9) from the first set of projection lines. The method further comprises the step of determining a second projection line (10) from a second set of projection lines either corresponding to instantaneous positions and orientations of the light beam (13) or to an image of the dot (1) on a second camera (4). The method further comprises the step of calculating a 3D location (17) of said dot (1) on the scene (2) based on said first and second projection lines (9, 10), wherein said 3D location (17) is defined in a region (13) in which the first projection line (9) and second projection line (10) are closest to each other.

## Description

### TECHNICAL FIELD

The present invention relates to a method for 3D reconstruction.

### BACKGROUND

There are several ways to reconstructing a 3D scene, one of which is triangulation, wherein two cameras are used to capture information of a scene, and by triangulating the data (2D) of the two cameras. In a first step, 2D data of the scene is obtained by each camera, after which the 2D data of both cameras is triangulated to obtain the 3D information of the scene. This can be done by performing said triangulation using mathematical operations at each point in the scene. However, this process is time- and energy-consuming.

There is a need, therefore, for a method that allows low-power and low-latency 3D reconstruction. The present invention aims at resolving, at least in part, the problems mentioned above.

### SUMMARY OF THE INVENTION

It is an object of embodiments of the present invention to provide a fast and low-power method for 3D reconstruction. The above objective is accomplished by a system and method according to the present invention.

In a first aspect, the present invention relates to a method for 3D reconstruction of a scene, comprising the steps of:
- providing a first camera having a known position and orientation;
- determining a first set of projection lines corresponding to pixels of said first camera, said projection lines being defined by the position and orientation of said camera and the corresponding pixel;
- projecting a light beam on the scene by means of a light source thereby defining a dot on said scene;
- determining the pixel corresponding to an image of the dot on said first camera, thereby defining a corresponding first projection line from the first set of projection lines;
- determining a second projection line from a second set of projection lines either corresponding to instantaneous positions and orientations of the light beam or to an image of the dot on a second camera;
- calculating a 3D location of said dot on the scene based on said first and second projection lines, wherein said 3D location is defined in a region in which the first projection line and second projection line are closest to each other.

It is an advantage of embodiments of the present invention that a fast 3D reconstruction is obtained, since the 3D location is obtained based on projection lines that are previously defined e.g. pre-computed or predefined. It is an advantage of embodiments of the present invention that the power consumption is reduced since less processing needs to be done. It is an advantage of embodiments of the present invention that the amount of memory needed is low since the method only needs to store projection lines. It is an advantage of embodiments of the present invention that the needed processing time and memory do not scale when having more than two optical sensors since the projection lines are pre-computed.

Preferred embodiments of the first aspect of the invention comprise one or a suitable combination of more than one of the following features.

Said region is preferably defined on a perpendicular line on said first projection line and said second projection line, preferably wherein said 3D location is midway between said projection lines. It is an advantage of embodiments of the present invention that this assumption makes it easy and fast to find the 3D location while at the same time providing a good estimate of the 3D location.

In the absence of pre-defined projection lines in said first and/or set of second projection lines, the method preferably further comprises the steps of defining said first projection line on said first set of projection lines and/or defining said second projection line on said second set of projection lines. It is an advantage of embodiments of the present invention that, in the event of changes in the system, such as calibration, the sets (e.g. look-up tables) can be refilled.

The method further comprises the step of updating the projection lines in said first and/or second projection lines. It is an advantage of embodiments of the present invention that, in case of recalibration, the projection lines are updated.

The method preferably comprises the step of scanning said light beam on said scene along a trajectory, wherein said trajectory comprises a plurality of points on said scene. It is an advantage of embodiments of the present invention that the need for stereo-matching is eliminated since the method relies on the position of the light spot.

The first and/or second sets of projection lines are preferably progressively filled with projection lines. It is an advantage of embodiments of the present invention that the look-up tables can be used if the needed information is available or refilled if the needed information is unavailable so that it can be used in the future.

The method preferably comprises the step of arranging the plurality of sensing units in M rows and N columns, wherein each projection line or each predetermined number of projection lines corresponds to at least one pixel. It is an advantage of embodiments of the present invention that storing the look-up tables consumes a low amount of memory. It is an advantage of embodiments of the present invention that the memory needed to store said projection lines is adjustable. It is an advantage of embodiments of the present invention that the accuracy of said projection lines is adjustable.

The method preferably comprises the step of providing a single-photon detector within each pixel, preferably SPADs. It is an advantage of embodiments of the present invention that a fast detection of the position of the light spot is obtained due to the fast nature of the detectors.

In a second aspect, the present invention relates to an optical sensing system for 3D reconstruction of a scene, comprising:
- a first camerawherein said first camera comprises a plurality of pixels, each of said pixel comprising a photodetector, said first camera having a known position and orientation,
- a light source, wherein said light source is adapted to project a light beam on the scene, thereby defining a dot on said scene,
- optics able to produce an image of said scene on said first camera, and
- a memory element comprising a first and a second set of projection lines,

wherein said first set of projection lines correspond to pixels of said first camera, said projection lines being defined by the position and orientation of said camera and the corresponding pixel,
wherein the system is adapted to determine the pixel corresponding to an image of the dot on said first camera , thereby defining a corresponding first projection line from the first set of projection lines,
the system being further adapted to determine a second projection line from the second set of projection lines, either corresponding to instantaneous positions and orientations of the light beam or to an image of the dot on a second camera having a known position and orientation,
wherein the system is adapted to calculate a 3D location of said dot on the scene based on said first and second projection lines, wherein said 3D location is defined in a region in which the first projection line and second projection line are closest to each other.

Preferred embodiments of the second aspect of the invention comprise one or a suitable combination of more than one of the following features:
- said region is defined on a perpendicular line on said first projection line and second projection line, preferably wherein said 3D location is midway between said projection lines,
- the system is adapted, in the absence of pre-defined projection lines in said first and/or second set of projection lines , to define the first projection line on said first set of projection lines, and to define the second projection line on said second set of projection lines,
- the system further comprises scanning means, wherein said scanning means is adapted to scan said light beam on said scene along a trajectory, wherein said trajectory comprises a plurality of points on said scene,
- the system is adapted to progressively fill said memory element with projection lines,
- the pixels are arranged in M rows and N columns, wherein each projection line or each predetermined number of projection lines corresponds to at least one pixel, and
- the photodetectors are single-photon detectors, preferably SPADs.

The above and other characteristics, features, and advantages of the present invention will become apparent from the following detailed description, taken in conjunction with the accompanying drawings, which illustrate, by way of example, the principles of the invention. This description is given for the sake of example only, without limiting the scope of the invention.

### DESCRIPTION OF THE FIGURES

The disclosure will be further illustrated by means of the following description and the appended figures.
Figure 1 shows the system (100) for 3D imaging, according to embodiments of the present invention.
Figure 2 shows the 3D location (17) of the light spot (1) in two different views (a, b), according to embodiments of the present invention.
Figure 3 shows (a) two projection lines (9, 10), corresponding to two optical sensors (e.g. cameras), and (b) three projection lines (9, 10, 19), corresponding to three optical sensors, according to embodiments of the present invention.
Figure 4 shows how 3D locations (31-34) are defined by projection lines (20-23) and (29) of different sensing units (e.g. pixels) (24-27) and (30), according to embodiments of the present invention.
Fig. 5 shows the system (100) similarly to Fig. 1, but having only one optical sensor (3), according to embodiments of the present invention.

Any reference signs in the claims shall not be construed as limiting the scope. In the different drawings, the same reference signs refer to the same or analogous elements.

### DETAILED DESCRIPTION

The present invention relates to a method for 3D reconstruction of a scene and a system therefor.

The present invention will be described with respect to particular embodiments and with reference to certain drawings, but the invention is not limited thereto but only by the claims. The drawings described are only schematic and are non-limiting. In the drawings, the size of some of the elements may be exaggerated and not drawn on scale for illustrative purposes. The dimensions and the relative dimensions do not correspond to actual reductions to the practice of the invention.

The terms "first", "second" and the like in the description and in the claims are used for distinguishing between similar elements and not necessarily for describing a sequence, either temporally, spatially, in ranking, or in any other manner. It is to be understood that the terms so used are interchangeable under appropriate circumstances and that the embodiments of the invention described herein are capable of operation in other sequences than those described or illustrated herein.

Moreover, the terms "top", "under" and the like in the description and the claims are used for descriptive purposes and not necessarily for describing relative positions. It is to be understood that the terms so used are interchangeable under appropriate circumstances and that the embodiments of the invention described herein are capable of operation in other orientations than those described or illustrated herein.

In the description provided herein, numerous specific details are set forth. However, it is understood that embodiments of the invention may be practiced without these specific details. In other instances, well-known methods, structures, and techniques have not been shown in detail in order to not obscure an understanding of this description.

Similarly, it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features from different embodiments are meant to be within the scope of the invention, and form different embodiments, as would be understood by those in the art. For example, in the following claims, any of the claimed embodiments can be used in any combination.

Unless otherwise defined, all terms used in disclosing the invention, including technical and scientific terms, have the meaning as commonly understood by one of ordinary skill in the art to which this invention belongs. By means of further guidance, term definitions are included to better appreciate the teaching of the present invention.

As used herein, the following terms have the following meanings: "A", "an", and "the" as used herein refer to both singular and plural referents unless the context clearly dictates otherwise. By way of example, "a contaminant" refers to one or more than one contaminant.

The recitation of numerical ranges by endpoints includes all numbers and fractions subsumed within that range, as well as the recited endpoints.

In a first aspect, the present invention relates to a method for 3D reconstruction (e.g. depth estimation) of a scene. The method comprises the step of providing a first optical sensor (e.g. a first camera) having a known position and orientation. The method further comprises the step of determining a first set of projection lines corresponding to sensing units (e.g. pixels) of said first optical sensor. Said projection lines are defined by the position and orientation of said first optical sensor, as well as by the corresponding sensing unit on said optical sensor. For example, the plurality of sensing units are arranged in a matrix configuration. The method further comprises the step of projecting a light beam on the scene, by means of a light source, thereby defining a light spot (e.g. a dot) on said scene. For example, the light spot may be dot-shaped, a semi-dot, a collection of dots, or any other suitable shape.

The method further comprises the step of determining the pixel corresponding to an image of the light spot on said first optical sensor, thereby defining a corresponding first projection line from a first set of projection lines. For example, determining the location of detection (i.e. which sensing unit detected the light spot) on said optical sensor, and the corresponding projection line thereto.

The method further comprises the step of determining a second projection line from a second set of projection lines either corresponding to instantaneous positions and orientations of the light beam, or to an image of the light spot on a second optical sensor (e.g. a second camera).

Preferably, the method comprises the step of imaging the scene on said optical sensor or sensors, for example, using the appropriate optics (e.g. at least one imaging optic) that are able to image said scene on said optical sensor or sensors. For example, the reflected light off the scene is received by at least one sensing unit of said plurality of sensing units of said optical sensor or sensors. The light is detected by said optical sensors, where the optical pulse is translated into an electrical signal or logic pulse. Each pulse is timestamped with respect to a reference clock. The detected signal is subsequently filtered, for example, using temporal and neighborhood information.

Advantageously, a first location of an image of the light spot on said first optical sensor is determined (i.e. the detection location), as well as a second location. The second location is the location of instantaneous position and orientation of the light beam of said light source. For example, considering the light source as a camera or an optical sensor, for which the image plane would then contain the dots forming the scanning pattern (e.g. a Lissajous pattern) instead of seeing the light spot with the sensing units.

For example, the projection lines are known. For example, the system comprises scanning means (as shown below) scanning the light beam of the light source on a scene, wherein the projection lines is known for each angle in which the scanning means is scanning.

Alternatively, the second location is the location of an image of the light spot on said second optical sensor. For example, wherein said first and second locations are locations on said sensing units, for example, the location of said sensing units on said optical sensors. For example, this step determines at which sensing unit the light spot is being imaged. Since the position and orientation of the camera is known, it is possible to define the location and orientation of each pixel.

Preferably, the method associates said first location with a first projection line previously defined in a first look-up table and associates said second location with a second projection line previously defined in a second look-up table. For example, wherein said look-up tables are stored in a memory. For example, wherein said look-up table is arranged in a matrix configuration, for example corresponding to the sensing units. For example, each sensing unit corresponds to one projection line.

The first optical sensor is defined by a location and orientation in a common global coordinate system i.e. the location and the orientation are expressed in said common global coordinate system, in 3D. Similarly, the light source or the second optical sensor is defined by a location and orientation (e.g. different location than that of the first optical sensor, e.g. same or different orientation than that of the first optical sensor) in the common global coordinate system i.e. the location and the orientation are expressed in said common global coordinates system. The orientation is, for example, defined as how the sensor is oriented, e.g. how it is directed e.g. which direction is it facing, for example, in terms of degrees, for example relative to the common global coordinate system. The orientation may also be expressed as a vector going through, for example, the position of the camera and the detection location on the camera.

Preferably, the global coordinate system is common to said second optical sensor, to said light spot, to said projection lines...etc. Advantageously, a global coordinate system common to all components in the system.

In the case in which the system comprises one optical sensor and one light source: since it is known where the light source is shining at each moment, for example the beam instantaneous position and orientation is known. Advantageously, the projection line may be defined based on said light source instead of said second optical sensor. For example, the second location and the second projection line are based on the light source, similar to how it is done with said second optical sensor. In this case, however, the second location needs to be estimated, for example, based on the trajectory (the scanning trajectory of light on a scene, e.g. a Lissajous pattern), the scanning frequency of the scanning means (e.g. MEMS), said scanning frequency defined based on the time it takes for the light to scan the scene from one edge to the other.

The method further comprises the step of calculating a 3D location of said light spot on the scene. For example, the location with respect to the first optical sensor or to the first and second optical sensors. Said 3D location is defined in a region in which the first projection line and second projection line are closest to each other. The skilled person appreciates that the two projection lines do not cross in real life, but they come to a point in which they are closest to each other in said region. This is due to measurement errors, such as quantization errors. For example, the 3D location of said light spot is assumed to be in the middle between said first projection line and said second projection line in the region in which they come closest to each other. In the case of three optical sensors and, therefore, three projection lines, the 3D location is calculated in a region in which all three projection lines are closest to each other. This is explained further in the figures below. The skilled person understands how to perform line-to-line distance calculations and how to find minimum distance location between two lines.

Since the 3D location is based on projection lines that are pre-computed, it is not necessary to calculate projection lines each time the 3D location needs to be calculated. This saves a lot of processing time and therefore increases the processing speed of the 3D reconstruction. This subsequently also reduces power consumption.

It is also advantageous that the amount of memory needed to store the projection lines is not large. As described above, each projection line is defined by the detection location and the orientation of the optical sensor; for example, it is defined by a ray or a vector. The memory needed is therefore low.

Another significant advantage is that when having more than two optical sensors, the processing time and memory in the case where the projection lines are precomputed do not scale as fast as they would in the case where the projection lines were not precomputed. In case it is precomputed, the amount of memory and time is proportional to the number of sensors (N), while in case it is not precomputed, it is exponentially proportional to the number of sensors (factorial N). For example, in the case of three optical sensors, it is necessary to calculate the projection line corresponding to each optical sensor twice. For example, calculating a first 3D location by calculating the first projection line and the second projection line, then calculating a second 3D location by calculating the first projection line (for the second time) and the third projection line, then calculating a third 3D location by calculating the second projection line (for the second time) and the third projection line (for the second time). Finally, the 3D location may be an average of the first, second, and third 3D locations. Alternatively, depending on an error metric, the first, second, and third 3D locations may have different weights. For example, if a 3D location corresponds to two optical sensors that are close to each other, then the weight of said 3D location is less than that of a 3D location corresponding to two optical sensors that are further from each other. This is because the further the two optical sensors are, the longer the baseline, and the more accurate the 3D location is. Alternatively, the 3D location may be at a point that minimizes the distance (or weight distance) to all projection lines. Many other implementations may be envisaged.

Calculating the projection lines twice comes from the fact that said projection lines are not stored and are just calculated on the spot, and based thereon, the 3D locations are calculated. This shows that when having more optical sensors, especially if there are more than two or more than three optical sensors, the time and energy needed scale dramatically.

The memory-time tradeoff should be kept in mind i.e. as the processing speed reduces, the required memory increases.

Preferably, the region in which said first and second projection lines are closest to each other is defined on a perpendicular line or in the neighborhood thereto, wherein said perpendicular line is perpendicular to said first projection line and second projection line, for example, perpendicular to and passing through both said first projection line and second projection line. For example, the intersections between the perpendicular line and the projection lines are found, and then the perpendicular line is defined based thereon. Preferably, said 3D location is midway between said projection lines. In other words, if we assume that the projection lines are vectors pointing towards the scene, the perpendicular line is the cross product of such vectors, and the 3D location is the point in the middle of the perpendicular line and in the middle between the projection lines. This is an easy and fast assumption to make, which, is in most cases, an accurate one.

The term "midway" may have a margin of 10% or 20%; for example, the 3D location is not precisely in the middle of the projection lines, but maybe 10% or 20% closer to either projection line.

Preferably, in cases where the system comprises three or more optical sensors and, therefore, three perpendicular lines are obtained, each of said perpendicular lines is assigned to a weighted average based on the length thereof. For example, such that the length of said perpendicular lines is inversely proportional to the weight. For example, the shorter the perpendicular line, the more weight it would have. This is because the shorter the perpendicular line corresponding to two projection lines, the more likely the 3D point is to be close to said projection lines.

Preferably, in the absence of pre-defined projection lines in said first and/or second sets of projection lines, the method further comprises the steps of defining said first projection line on said first look-up table, and/or defining (e.g. filling) said second projection line on said second look-up table. For example, in the absence of a projection line associated with a detection location. For example, the look-up tables are pre-computed in a previous stage before being used. For example, in the beginning, the look-up tables are empty. Therefore, they need to be filled first by projection lines. For example, the projection line corresponding to each sensing unit has to be calculated once, after which it is possible to use such a projection line for the calculation of the 3D location. In real life, calibration is needed every once in a while. For example, if something changes in the system, re-calibration may be needed. In this case, the projection lines should be computed again since they are only valid for one calibration.

Preferably, the method comprises the step of retrieving previously stored projection lines corresponding to a point in said plurality of points from said look-up tables to calculate a 3D location of said point based on said projection lines.

Preferably, the method further comprises the step of updating the projection lines in said first and/on second set of projection lines. For example, when the calibration is off, for example when the system needs to be recalibrated.

Preferably, the method comprises the step of scanning said light beam on said scene along a trajectory, wherein said trajectory comprises a plurality of points on said scene. Since the method relies on the position of the light spot, it is not necessary to perform stereo-matching. For example, the image on the two optical sensors can be matched using said light spot.

The 3D location is calculated for each point along said trajectory. This is done based on previously defined projection lines (as described above) or, in case of their absence, by first defining said projection lines and then using them when the same spot is being scanned again e.g. for a second or third time. Said scanning is preferably continuous, such that objects in the scene are continuously scanned and identified. For example, a light source generates a light beam, which produces said light spot on an object, wherein said beam is continuously scanned on said scene along said trajectory, wherein, for example, after every some time, the beam would have scanned all or almost all of the scene. The reflected signal is then received by the optical sensor. Scanning may be, for example, in a Lissajous pattern, a raster scan, or the like. The scanning means may, for example, be a MEMS scanner, a mirror, an optical phase array, metasurface approach beam scanning, or the like. Scanning the scene allows for calculating the 3D location at different parts of said scene.

Preferably, said first and second look-up tables (i.e. sets of projection lines) are progressively filled with projection lines. For example, each projection line corresponds to one point in said scene. For example, if the projection lines are available in the look-up table, they can be used. However, if not, for example, because the calibration of the system has changed, then the look-up tables can be refilled and used in the future. The idea of progressively filling the projection lines is advantageous since it is not needed after each calibration to wait to find out all the projection lines and store them, before starting the 3D reconstruction. Instead, they are stored progressively with time as the 3D reconstruction is being done e.g. step by step, until it is all refilled again or until the calibration changes. For example, as the 3D reconstruction is being done, the projection lines corresponding to different 3D locations are stored progressively.

Preferably, the method comprises the step of arranging the plurality of sensing units in M rows and N columns, for example, wherein each projection line or each predetermined number of projection lines corresponds to at least one sensing unit. In the case in which each projection line corresponds to one sensing unit, the number of projection lines per optical sensor is M x N. If each projection line is represented by a position in x-y-z i.e. 3 floating numbers, and a direction in x-y-z i.e. 3 floating numbers, and if each of these floating numbers is coded on 32 bits, then the memory size needed to store said projection lines would be 192 × M × N bits per optical sensor.

Alternatively, each projection line corresponds to two sensing units e.g. the sensing units are grouped in groups of two. For example, said projection line is the average of the projection lines of the group of two sensing units. For example, find the projection line of both sensing units, then find the average projection line, and store that average value in the memory. In this case, the number of projection lines is reduced to 0,5 × M × N for each optical sensor i.e. amounting to 96 × M × N bits. This is advantageous in reducing memory consumption e.g. reducing the data in the look-up table.

Alternatively, each sensing unit corresponds to two projection lines. For example, the projection lines are calculated based on the assumption that each sensing unit is split into two sensing units for computation purposes. In this case, the number of projection lines is doubled i.e. increased to 2 × M × N per optical sensor i.e. amounting to 384 × M × N bits. This is advantageous for increasing the accuracy of the 3D location. Different implementations may be envisaged, such as assuming that each sensing unit is split into two sensing units along two dimensions (i.e. split into four sensing units).

The preferred implementation among the above is chosen based on the situation and is re-adjustable, for example, based on the required amount of data stored in said look-up table and the needed accuracy of the projection lines.

Preferably, the method comprises the step of providing a single-photon detector within each sensing unit. This is advantageous since such detectors are fast by nature, so the position of the light spot is detected quickly but also accurately. Single photon detectors also minimize the energy needed to be able to detect said light spot. In other prior art systems where single photon detectors are not used, the detection is slow, such that, for example, the scanned light spot on the scene appears as a line or complex structured light pattern instead of individual light spots, in which case stereo matching would be needed. However, using single photon detectors to detect a light spot (e.g. a dot) that is being scanned eliminates the need for stereo-matching.

In a second aspect, the present invention relates to a system for 3D reconstruction of a scene. The system comprises at least a first optical sensor, or at least a first optical sensor and a second optical sensor, wherein said optical sensor or sensors (i.e. camera) comprise(s) a plurality of sensing units (e.g. in a matrix configuration), each of said sensing units comprising a photo detector. Each of said optical sensor or sensors have a known position and orientation. The system further comprises at least one light source, wherein said light source is adapted to project a light beam on the scene, for example, a dot or the like, thereby defining a dot on said scene. Preferably, the system further comprises optics capable of producing an image of said scene on said optical sensor or sensors. For example, the light is reflected, after hitting objects in the scene, to the optical sensors. The system further comprises a memory element. For example, the memory element comprises two look-up tables (i.e. first and second set of projection lines), one for each optical sensor.

Said first set of projection lines correspond to pixels of said first camera. Said projection lines being defined by the position and orientation of said camera and the corresponding pixel.

The system is adapted to determine the pixel corresponding to an image of the dot on said first camera, thereby defining a corresponding first projection line from the first set of projection lines.

The system is further adapted to determine a second projection line from the second set of projection lines, either corresponding to instantaneous positions and orientations of the light beam or to an image of the dot of the second camera.

Preferably, the system is adapted to read a first location of an image of the light spot on said first optical sensor e.g. reading the location of detection of the light spot on the optical sensor, and to read a second location. Said second location is the instantaneous position and orientation of said light beam, or said second location is the location of an image of the light spot on said second optical sensor.

For example, in the case of having said first and second optical sensors, said first and second locations correspond to sensing units. For example, that is the location of the light spot imaged on said first and second optical sensors, for example, corresponding to the location of the sensing unit i.e. which sensing unit is receiving the image of the light spot.

Preferably, the system is adapted to associate a first projection line previously defined in said memory element (e.g. in one of said look-up tables) with a detection location on said first optical sensor.

For example, the system is adapted to associate a second projection line previously defined in said memory element (e.g. in the other one of said look-up tables) with a detection location on said second optical sensor.

The system is adapted to calculate a 3D location of said dot on the scene based on said first and second projection lines, wherein said 3D location is defined in a region in which the first projection line and second projection line are closest to each other.

Preferably, the region in which said projection lines are closest to each other is defined on a perpendicular line on said first projection line and said second projection line. For example, said 3D location is midway between said projection lines.

Preferably, the system is adapted, in the case of pre-defined projection lines in said first and/or second set of projection lines, to define (e.g. fill) the first and second projection lines on said first and second sets.

Preferably, the system further comprises scanning means, wherein said scanning means is adapted to scan said light beam on said scene along a trajectory, wherein said trajectory comprises a plurality of points on said scene. Scanning said scene is done at least partially, preferably for most of the scene (or the full scene), for each of said plurality of points. For example, the very first light spot is also part of the plurality of points. This is advantageous in finding projection lines for most or all points defining said scene so as to fill the look-up tables.

Scanning a light beam from said light source is advantageous in allowing triangulation. For example, using a system comprising a light source emitting a light beam on a scene (e.g. an environment) and two of said optical sensors, wherein said two sensors have a shared field of view of the scene, it is possible to convert x-y-time data of the two sensors to x-y-z-time data by triangulation, for each time stamp. For example, by adapting said light source to illuminate a light beam on said scene in an illumination trace, wherein said light source comprises means adapted to scan said light beam on said scene (preferably continuously), wherein said optical sensors monitor the light spot produced by said light beam and output locations of points of at least one object (e.g. points of surfaces of said object) in said scene along said trace at a plurality of instances, wherein the x-y-time data of the two optical sensors can be converted to x-y-z-time data using triangulation. The light source may act, for example, as a reference point, such that said locations of said points of said object of the first optical sensor can be triangulated with those of the second optical sensor to create the depth or z-dimension. However, in the context of this invention, the 3D location is preferably found by defining the projection lines and the region where they are closest to each other and defining the perpendicular line and the point midway on said perpendicular line, as described above.

Preferably, the system is adapted to progressively fill said memory element with projection lines e.g. said first and second projection lines. For example, as the scanning goes on, more and more projection lines are stored in the memory element.

Preferably, the sensing units are arranged in M rows and N columns, wherein each projection line or each predetermined number of projection lines corresponds to at least one sensing unit.

Preferably, the photodetectors are single-photon detectors, preferably a single-photon avalanche detector (SPAD). Alternatively, said photodetector is an avalanche photodetector. Using SPADs in the pixels (i.e. sensing units) is advantageous because it is sensitive to a single photon, which means that the active projected structure will need a minimum amount of energy since the detector is single photon sensitive. Another advantage is the sub-nanoseconds response time of SPADs, meaning the photon is detected and encoded into a digital signal in nanoseconds.

Preferably, triangulation, or in this case, finding the 3D location, may be preceded by a filtering step, for example, to reduce the number of sensing units with false detections and only triangulate the data of sensing units with a true detection. For example, checking the detection of the neighboring sensing units (e.g. pixels), or checking the persistence of the detections over time, for example, as described in PCT IB2021 054688, PCT EP2021 087594, PCT IB 2022 000323, and PCT IB2022 058609. This is an in-pixel filtering mechanism. Other filtering mechanisms may also be available; for example, after projecting the detections on a periphery, it is possible to remove some noisy detections since the projection pattern is known e.g. Lissajous or the like.

For example, filtering may be based on expected pulse width, expected dot projection size, past detection(s) and current detection(s) of the pixel and its neighboring pixel(s). The detected signal is thereafter outputted on row and column signal buses, allowing to know the locations (i.e. the x, y coordinates) of the laser dot at each time stamp. For example, filtering is done based on past bus information to identify detection locations with the highest likelihood of having detected photons originating from active illumination.

Preferably, each photo detector is arranged in a reverse-biased configuration. Preferably, the detector is capable of detecting single photons impinging thereon. Preferably, the detector is adapted to output a logic signal e.g. an electrical detection signal, upon detection of a photon. For example, a detection signal may be represented by a signal comprising logic '1' e.g. a detection, while no detection signal may be represented by a signal comprising logic '0' e.g. no detection. Alternatively, a detection signal may be represented by or result in a pulse signal, e.g. a transition from logic '0' to logic '1', then a transition back from logic '1' to logic '0', while no detection may be represented by (or result in) the absence of such a pulse signal.

Preferably, the light source is adapted to be at a wavelength detectable by the sensing units of the optical sensor, for example, between 100 nanometers and 10 micrometers, preferably between 100 nanometers and 1 micrometer. For example, the optical sensor is a photodetector or a matrix of photodetectors that is able to detect photons impinging on each detector within a wavelength detection window falling within the range of 100 nanometers and 10 micrometers, preferably between 100 nanometers and 1 micrometer.

Preferably, the system comprises more than 100 pixel sensors (i.e. sensing units), preferably more than 1,000 pixel sensors, more preferably more than 10,000 pixel sensors, even more preferably more than 100,000 pixel sensors, most preferably more than 1,000,000 pixel sensors. For example, the system may be arranged in a matrix fashion, wherein said optical sensor comprises 1,000 pixel sensor rows and 1,000 pixel sensor columns.

Preferably, the system comprises image representation means, for example, a screen-like or other image representation devices, so as to reproduce the locations of points of said objects in said scene.

Preferably, the optical system is used for 3D vision applications. For example, the system may be used to visualize objects in three dimensions. Alternatively, said sensor may allow analyzing the scene, for example, by extracting features of objects in the scene, without necessarily producing an image of said scene. Preferably, the system further comprises a plurality of optical sensors and/or a plurality of light sources. This is advantageous for creating 3D vision, for example, by triangulating the outputs (i.e. the x-y data) of two such optical sensors to obtain 3D information (x-y-z data).

Any feature of the second aspect (system) may be as correspondingly described in the first aspect (method).

In a third aspect, the present invention relates to the use of a method according to the first aspect for 3D reconstruction of a scene, and/or a system according to the second aspect for 3D reconstruction of a scene.

Further characteristics and advantages of embodiments of the present invention will be described with reference to the figures. It should be noted that the invention is not restricted to the specific embodiments shown in these figures or described in the examples but is only limited by the claims.

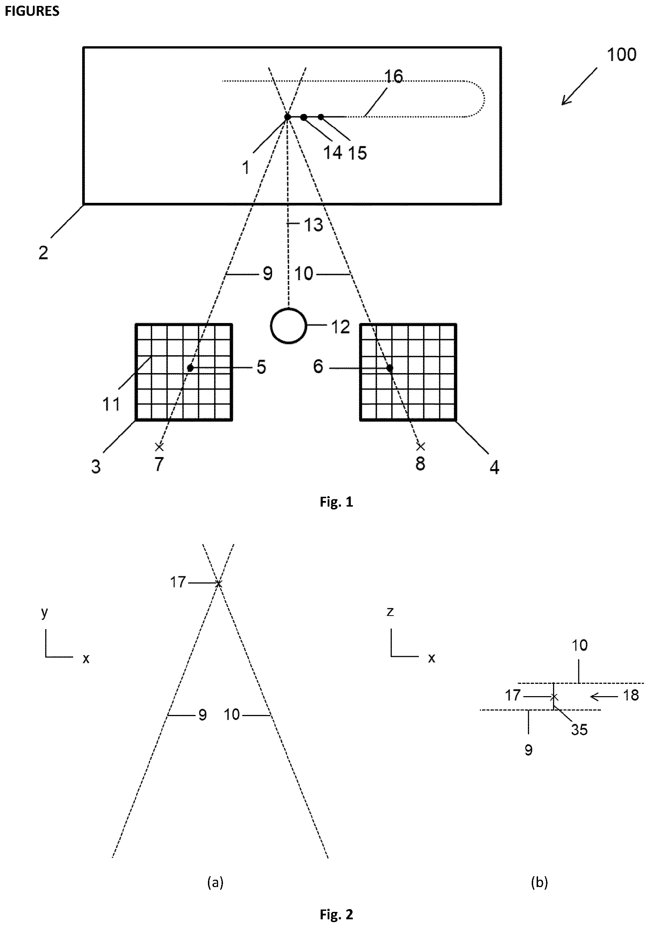

Fig. 1 shows the system (100) for 3D imaging, according to the embodiments of the present invention. The system (100) comprises a first optical sensor (3) and a second optical sensor (4). Each optical sensor (3, 4) comprises a plurality of sensing units (11). The system further comprises a light source (12), which projects a light spot (1) generated by a light beam (13) on a scene (2). The light beam (13) is scanned on the scene (2) along a trajectory (16), wherein said trajectory (16) comprises a plurality of points (14, 15). The plurality of points also comprises the point at which the light spot (1) is in the first instance.

The system (100) further comprises optics able to produce an Image of said scene (2) on said optical sensors (3, 4). For example, an image of the light spot (1) is produced on a sensing unit (11) of said first and second optical sensors (3, 4). For example, the location of the light spot (1) produced on the sensing unit (11) of the first optical sensor (3) is referred to as the first location (5), and similarly, the second location (6).

Furthermore, a first and a second camera positions (7, 8) (in 3D)are defined for one calibration of the optical sensors (3, 4). The first and second camera positions (7, 8) (in 3D) represent the global location of each optical sensor (3, 4), as understood by the skilled person. For example, a global location in a global coordinate system common to the optical sensors (3, 4), the projection lines (9, 10), and the light spot (1). The skilled person also understands that the calibration is based on extrinsic factors e.g. location and/or orientation of the sensors (3, 4), and intrinsic factors (internal parameters of the camera such as the focal lengths and the principal point offset).

Fig. 2 shows the 3D location (17) of the light spot (1) in two different views: (a) a top view and (b) a side view, according to embodiments of the present invention. As shown, the 3D location (17) is in a region (18), in which the projection lines (9, 10) are closest to each other. Ideally, the point is at the cross-section of the two lines. However, in real life, the projection lines (9, 10) do not intersect. Therefore, the 3D location is estimated to be midway between the projection lines (9, 10), for example, by taking an average 3D location between the two projection lines (9, 10), as shown in (b). The skilled person understands how to find the 3D location, for example, based on the known locations of the detections on both optical sensors (cameras), and the extrinsic and intrinsic parameters of the camera. For example, using the information in this document: https://www.scratchapixel.com/lessons/3d-basic-rendering/computing-pixel-coordinates-of-3d-point/mathematics-computing-2d-coordinates-of-3d-points.html, which is hereby incorporated by reference.

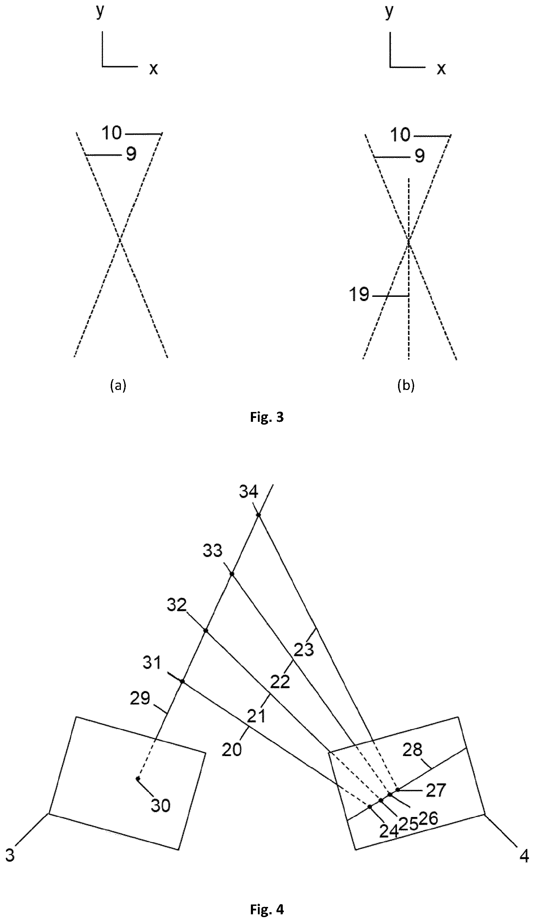

Fig. 3 shows (a) two projection lines (9, 10), corresponding to two optical sensors, and (b) three projection lines (9, 10, 19), corresponding to three optical sensors, according to embodiments of the present invention. In the first case, calculating the 3D location (17) is based on the first and second projection lines (9, 10). Since the projection lines (9, 10) are pre-computed, it is only necessary to find the 3D location based on the projection lines (9, 10). In case the projection lines (9, 10) weren't computed in advance, it would be required to compute them first, then find the 3D location.

The problem with not computing the projection lines (9, 10) in advance becomes clearer in the presence of three or more projection lines, for example, a first, a second, and a third projection line (9, 10, 19), for example, corresponding to three optical sensors, as shown in (b). In this case, it is needed first to compute each projection line twice since projection lines are typically not stored. For example, first computing the first projection line (9) and the second projection line (10), and finding a first 3D location, then computing the first projection line (9) and the third projection line (19), and finding a second 3D location. Thirdly, computing the second projection line (10) and the third projection line (19), and finding a third 3D location. Finally, a final 3D location is found based on said first, second, and third 3D locations. This clearly increases the processing time i.e. the speed reduces when more optical sensors are included in the system. The processing speed is reduced further when the resolution of the optical sensors i.e. the number of sensing units in said optical sensors is high.

However, based on the present invention, the processing time would not scale as dramatically i.e. the processing speed is not reduced as dramatically. This is because there is no need to compute the projection lines, as they are pre-computed. It is therefore only needed to retrieve them from the look-up table or memory and find the three 3D locations and, afterwards, the final 3D location, as described above. The skilled person appreciates that computing the projection lines is the computationally heavy part of such a 3D reconstruction. The skilled person understands that there is a time-memory tradeoff with the abovementioned invention. For example, the precomputation reduces the processing time but increases the memory consumption.

Fig. 4 shows four different projection lines (20-23) corresponding to four sensing units (24-27) of said second optical sensor (4) along an Epipolar line (28), and one projection line (29) corresponding to one sensing unit (30) of said first optical sensor (3). The four projection lines (20-23) cross the one projection line (29) at four different 3D locations (31-34). In other words, any 3D location on the scene can be defined by two projection lines. For example, the 3D location at (30) is defined by projection lines (20) and (29), and similarly, the 3D location at (33) is defined by projection lines (23) and (20), and so on. By pre-computing the projection lines, it is possible to define the 3D locations on the scene based on said projection lines.

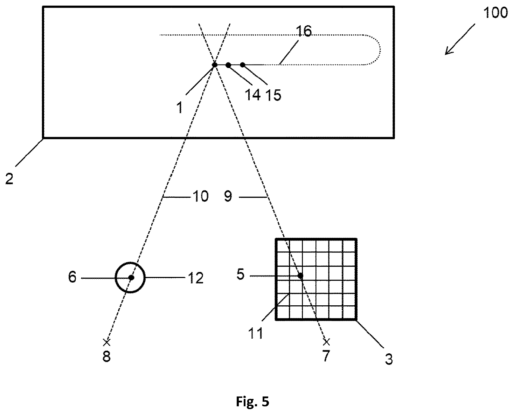

Fig. 5 shows a system (100) for 3D imaging, similar to Fig. 1. However, Fig. 5 has only the first optical sensor (3). In this case, the light source (12) and the scanner thereof are used instead of the second optical sensor (4) for finding the second projection line (10), as described above.

Other arrangements for accomplishing the objectives of the methods and devices embodying the invention will be obvious to those skilled in the art. The preceding description gives details of certain embodiments of the present invention. It will, however, be clear that no matter how detailed the above turns out to be in text, the invention may be applied in many ways. It should be noted that the use of certain terminology when describing certain characteristics or aspects of the invention should not be interpreted as implying that the terminology herein is defined again to be restricted to specific characteristics or aspects of the invention to which this terminology is coupled.

### LIST OF REFERENCE SIGNS

- **1**: Light spot
- **2**: Scene
- **3**: First optical sensor
- **4**: Second optical sensor
- **5**: First location
- **6**: Second location
- **7**: First camera position
- **8**: Second camera position
- **9**: First projection line
- **10**: Second projection line
- **11**: Sensing unit
- **12**: Light source
- **13**: Light beam
- **14, 15**: Plurality of points
- **16**: Trajectory
- **17**: 3D location of the light spot
- **18**: Region in which the projection lines are closest to each other
- **19**: Third projection line
- **20-23**: Four projection lines
- **24-27**: Four sensing units
- **28**: Epipolar line
- **29**: One projection line
- **30**: One sensing unit
- **31-34**: Four different 3D locations
- **35**: Line perpendicular to projection lines
- **100**: System

## Claims

1. A method for 3D reconstruction of a scene (2), comprising the steps of:
- providing a first camera (3) having a known position and orientation;
- determining a first set of projection lines corresponding to pixels (11) of said first camera (3), said projection lines being defined by the position and orientation of said camera (3) and the corresponding pixel (11);
- projecting a light beam (13) on the scene (2) by means of a light source (12) thereby defining a dot (1) on said scene (2);
- determining the pixel corresponding to an image of the dot (1) on said first camera (3), thereby defining a corresponding first projection line (9) from the first set of projection lines;
- determining a second projection line (10) from a second set of projection lines either corresponding to instantaneous positions and orientations of the light beam (13) or to an image of the dot (1) on a second camera (4);
- calculating a 3D location (17) of said dot (1) on the scene (2) based on said first and second projection lines (9, 10), wherein said 3D location (17) is defined in a region (18) in which the first projection line (9) and the second projection line (10) are closest to each other.

2. A method according to claim 1, wherein said region (18) is defined on a perpendicular line (35) on said first projection line (9) and second projection line (10), preferably wherein said 3D location (17) is midway between said projection lines (9, 10).

3. A method according to any of claims 1 or 2, wherein in case of absence of pre-defined projection lines in said first and/or second sets of projection lines, the method further comprises the steps of:
- defining said first projection line (9) on said first set of projection lines, and/or
- defining said second projection line (10) on said second set of projection lines.

4. A method according to any of claims 1 to 3, wherein the method further comprises the step of updating the projection lines in said first and/or second set of projection lines.

5. A method according to any of claims 1 to 4, wherein the method comprises the step of scanning said light beam (13) on said scene (2) along a trajectory (16), wherein said trajectory (16) comprises a plurality of points (14, 15) on said scene (2).

6. A method according to any of claims 1 to 5, wherein said first and/or second sets of projection lines are progressively filled with projection lines.

7. A method according to any of claims 1 to 6, wherein the method comprises the step of arranging the plurality of sensing units (11) in M rows and N columns, wherein each projection line (9, 10) or each predetermined number of projection lines (9, 10) corresponds to at least one pixel (11).

8. A method according to any of claims 1 to 7, wherein the method comprises the step of providing a single-photon detector within each pixel (11), preferably SPADs.

9. An optical sensing system (100) for 3D reconstruction of a scene (2), comprising:
- a first camera (3) wherein said first camera (3) comprises a plurality of pixels (11), each of said pixels (11) comprising a photodetector, said first camera (3) having a known position and orientation,
- a light source (12), wherein said light source (12) is adapted to project a light beam on the scene (2) thereby defining a dot (1) on said scene (2),
- optics able to produce an image of said scene (2) on said camera (3) or cameras (3, 4), and
- a memory element comprising a first and a second set of projection lines,
wherein said first set of projection lines correspond to pixels (11) of said first camera (3), said projection lines being defined by the position and orientation of said camera (3) and the corresponding pixel, wherein the system (100) is adapted to determine the pixel corresponding to an image of the dot (1) on said first camera (3), thereby defining a corresponding first projection line (9) from the first set of projection lines,
the system (100) being further adapted to determine a second projection line (10) from the second set of projection lines, either corresponding to instantaneous positions and orientations of the light beam (13) or to an image of the dot (1) on a second camera (4) having a known position and orientation,
wherein the system (100) is adapted to calculate a 3D location (17) of said dot (1) on the scene (2) based on said first and second projection lines (9, 10), wherein said 3D location (17) is defined in a region (18) in which the first projection line (9) and second projection line (10) are closest to each other.

10. An optical sensing system (100) according to claim 9, wherein said region (18) is defined on a perpendicular line (35) on said first projection line (9) and second projection line (10), preferably wherein said 3D location (17) is midway between said projection lines (9, 10).

11. An optical sensing system (100) according to any of claims 9 to 10, wherein the system (100) is adapted, in case of absence of pre-defined projection lines in said first and/or second set of projection lines , to define the first projection line (9) on said first set of projection lines, and to define the second projection line (10) on said second set of projection lines.

12. An optical sensing system (100) according to any of claims 9 to 11, wherein the system (100) further comprises scanning means, wherein said scanning means is adapted to scan said light beam (13) on said scene (2) along a trajectory (16), wherein said trajectory (16) comprises a plurality of points (14, 15) on said scene (2).

13. An optical sensing system (100) according to any of claims 9 to 12, wherein the system (100) is adapted to progressively fill said memory element with projection lines.

14. An optical sensing system (100) according to any of claims 9 to 13, wherein the pixels (11) are arranged in M rows and N columns, wherein each projection line (9, 10) or each predetermined number of projection lines (9, 10) correspond to at least one pixel.

15. An optical sensing system (100) according to any of claims 9 to 14, wherein the photodetectors are single-photon detectors, preferably SPADs.
